# EUROPÄISCHE PATENTSCHRIFT

(11) **EP 1 523 669 B1**
(45) Veröffentlichungstag und Bekanntmachung des Hinweises auf die Patenterteilung: **23.01.2008**
(21) Anmeldenummer: 03766222.8
(22) Anmeldetag: 18.07.2003
(51) Int. Cl.: G01N 21/85, G01N 21/55

(54) **VORRICHTUNG ZUR IR-SPEKTROMETRISCHEN ANALYSE EINES FESTEN, FLÜSSIGEN ODER GASFÖRMIGEN MEDIUMS SEMINATION**
DEVICE FOR THE IR-SPECTROMETRIC ANALYSIS OF A SOLID, LIQUID OR GASEOUS MEDIUM
DISPOSITIF D'ANALYSE SPECTROMETRIQUE INFRAROUGE D'UN MILIEU SOLIDE, LIQUIDE OU GAZEUX

(30) Priorität: 24.07.2002 DE 10233710; 09.04.2003 DE 10316514
(43) Veröffentlichungstag der Anmeldung: 20.04.2005
(73) Patentinhaber: Endress + Hauser Conducta GmbH + Co. KG, 70839 Gerlingen (DE)
(72) Erfinder: HEFFELS, Camiel, 64579 Gernsheim (DE); LINDMÜLLER, Peter, 76879 Essingen (DE); SCHOLTEN, Dick, 70176 Stuttgart (DE); STEINMÜLLER, Dirk, 76139 Karlsruhe (DE)
(74) Vertreter: Andres, Angelika Maria
(86) Internationale Anmeldenummer: PCT/EP2003/007838
(87) Internationale Veröffentlichungsnummer: WO 2004/013621

(56) Entgegenhaltungen:
- WO-A-00/62028
- WO-A-99/40419
- DE-A- 10 034 220
- US-A- 3 669 545
- US-A- 3 733 130
- US-A- 5 754 722
- US-A1- 2002 190 213

## Beschreibung

Die Erfindung betrifft eine Vorrichtung zur IR-spektrometrischen Analyse eines festen, flüssigen oder gasförmigen Mediums mittels einer optischen Sonde. Die Sonde kann eine ATR-, eine Transmissions- oder eine Reflexionsanordnung aufweisen.

In der ATR (Attenuated Total Reflectance)-Spektroskopie wird der Effekt ausgenutzt, daß ein Lichtstrahl an der Grenzfläche zwischen einem optisch dichteren Medium mit dem Brechungsindex *n*₁ und einem optisch dünneren Medium mit dem Brechungsindex *n*₂ - also wenn gilt: *n*₁ *> n*₂ - total reflektiert wird, wenn der Einfallswinkel des Lichtstrahls den Grenzwinkel für die Totalreflexion überschreitet. Der Sinus dieses Grenzwinkels entspricht dem Quotienten *n*₂/*n*₁. Bei der Totalreflexion tritt das Phänomen auf, daß der Lichtstrahl an der Auftreffstelle A in das dünnere Medium austritt, dann bis zu einer Stelle B als Oberflächenwelle an dem dichteren Medium vorbeiläuft und anschließend wieder in das optisch dichtere Medium zurückkehrt. Erfolgt keine Absorption in dem optisch dünneren Medium, so wird der Lichtstrahl ungeschwächt total reflektiert. Absorbiert das optisch dünnere Medium jedoch die eindringende Strahlung, so tritt eine Schwächung des total-reflektierten Lichtstrahls auf. Diese Schwächung ist abhängig von der Wellenlänge und kann zur sog. Internen Reflexionsspektroskopie herangezogen werden: Bestimmt man das Transmissions- oder Extinktionsspektrum der total-reflektierten Strahlung, so erhält man Aufschluß über die Zusammensetzung des optisch dünneren Mediums. Bei dem optisch dünneren Medium kann es sich beispielsweise um eine IR-absorbierende, pulverförmige Substanz oder um ein flüssiges Medium handeln, mit dem die ATR-Sonde in direktem Kontakt steht.

ATR-Sonden werden heute bevorzugt in der IR-Spektroskopie oder im UV-VIS-Bereich eingesetzt. Wesentliches Element einer ATR-Sonde ist ein Reflexionselement, das aus einem im IR-Bereich transparenten Material mit einem hohen Brechungsindex besteht. Die bekannten Sonden sind derart ausgestaltet, daß innerhalb des Reflexionselements Vielfach-Reflexionen auftreten.

In der US-PS 5,459,316 ist eine ATR-Sonde für den IR-Bereich beschrieben, die in pulverförmigen oder flüssigen Medien eingesetzt werden kann. Licht wird von einer Lichtquelle über ein Meßrohr zu dem ATR-Kristall hin bzw. von dem ATR-Kristall weggeführt. Die dem Medium zugewandte Seitenfläche des ATR-Kristalls und die vom Medium abgewandte Seitenfläche des ATR-Kristalls sind - im Querschnitt gesehen - keilförmig ausgestaltet. Bevorzugt sind die in dieser Patentschrift offenbarten Ausgestaltungen des ATR-Kristalls rotationssymmetrisch bezüglich ihrer Längsachse. Die doppelkonische Form eines derartigen ATR-Kristalls bzw. eines derartigen ATR-Reflexionselements zur Vermeidung von störenden Interferenzen im Fourier Transform (FT-IR) Spektrometer ist aufwendig und kann durch die Verwendung des in dieser Schrift vorgeschlagenen Spektrometers vermieden werden. Außerdem ist das in der US-PS 5,459,316 vorgestellte Reflexionselement in Kombination mit einem FT-IR Spektrometer zu groß, um aus dem idealen Material Diamant kostengünstig hergestellt zu werden. Die WO 00/62028 A beschreibt ebenfalls eine mit einem Spektrometer verbundene ATR-Sonde.

Aus der Transmissionsspektroskopie sind weiterhin Sonden bekannt geworden, bei denen die Meßstrecke durch den Abstand zweier optischer Fenster definiert wird. Dieses führt zu einem Sondenkörper mit relativ vielen Bauteilen (Fenster, Spiegel, Halterungen). Analog zu dem Reflexionselement einer ATR-Sonde ist eine Transmissionsanordnun bekannt geworden, bei der das Reflexionselement einen Schlitz aufweist (siehe z.B. die US 3,733,130 A). Durch die Breite des Schlitzes ist der Meßspalt definiert. Wie bereits erwähnt, können alle bekannten Arten von Reflexionselementen in Verbindung mit der vorliegenden Erfindung eingesetzt werden.

Auf der Seite des Strahlungsempfängers sind in der Gasmeßtechnik darüber hinaus Systeme bekannt geworden, bei denen das reflektierte und wellenlängenabhängig geschwächte Licht über ein speziell auf den jeweiligen Anwendungsfall abgestimmtes Linear-Variables Filter auf einen Pixelzeilendetektor gelangt. Eine entsprechende Anordnung ist in der US-PS 5,920,069 beschrieben. Anschließend werden die in jedem Detektorelement des Pixelzeilendetektors gemessenen Intensitätswerte zwecks Erstellung des Spektrums der Meßprobe ausgewertet.
Als Nachteil dieser Ausgestaltung, bei der die Meßwerterfassung parallel abläuft, ist einmal die hohe Anzahl der Pixeldetektoren zu nennen. Weiterhin wird in jedem der Pixeldetektoren nur ein Bruchteil der Gesamtintensität gemessen, wobei dieser Bruchteil um so kleiner ist, je größer die Anzahl der Pixeldetektoren ist. Infolge eines ungünstigen Signal-/Rauschverhältnisses erhält man hierdurch eine relativ schlechte Signalauflösung. Nachteilig bei der bekannten Ausgestaltung ist darüber hinaus, daß speziell ausgestaltete, auf den jeweiligen Anwendungsfall abgestimmte Pixelzeilendetektoren hohe Herstellungskosten verursachen und trotzdem eine oder mehrere defekte Pixeldetektoren oder sogar nicht-lineare Kennlinien aufweisen.

Der Erfindung liegt die Aufgabe zugrunde, eine kostengünstige Vorrichtung zur spektrometrischen Analyse eines Meßmediums vorzuschlagen.

Die Aufgabe wird gemäß einer ersten Variante durch eine Vorrichtung gelöst, die eine Prozeßsonde mit einem Reflexionselement, ein Linear-Variables Filter, zumindest ein Detektorelement und eine Regel-/Auswerteeinheit aufweist. Zu der erfindungsgemäßen Vorrichtung gehören desweiteren zumindest eine Lichtquelle, deren Licht z. B. über eine Kollimieroptik oder einen Ellipsoidspiel entweder mit oder ohne Lichtwellenleiter in das Reflexionselement eingekoppelt wird und zumindest ein Lichtwellenleiter mit einem Eingangsabschnitt und einem Ausgangsabschnitt. Das Licht wird über den Ausgangsabschnitt des Wellenleiters in definierte Bereiche des Linear-Variablen Filters geleitet; das Detektorelement und das Linear-Variable Filter sind über näherungsweise die Länge des Linear-Variablen Filters relativ zueinander bewegbar angeordnet. Die Regel-/Auswerteeinheit bestimmt anhand der von dem Detektorelement gelieferten Meßwerte das Spektrum des Mediums.

Insbesondere kann die Strahlung verlustfrei mittels einer Fokussiereinheit über den Eingangsabschnitt des Wellenleiters aus dem Reflexionselement ausgekoppelt werden. Der Wellenleiter, bei dem es sich üblicherweise um einen Lichtwellenleiterbündel handelt, führt das im Reflexionselement abgeschwächte Licht über das Linear-Variable Filter zum wellenlängenselektiven Nachweis. Das Detektorelement und der Ausgangsabschnitt des Wellenleiters stehen sich gegenseitig gegenüber und sind beide über näherungsweise die Länge des Linear-Variablen Filters relativ zu diesem bewegbar angeordnet, wobei sich das Linear-Variable Filter zwischen dem Detektorelement und dem Ausgangsabschnitt des Wellenleiters befindet.

Gemäß einer alternativen Variante erfolgt die Relativbewegung und damit das Abscannen des Spektrums des Meßmediums dadurch, daß die Strahlungsquelle und das Linear-Variable Filter relativ zueinander bewegt werden. Bei dieser Lösung wird also bereits monochromatische Strahlung in das Reflexionselement eingekoppelt.

Durch die beiden zuvor genannten erfindungsgemäßen Kombinationen läßt sich ein sehr kompaktes und kostengünstiges Spektrometermodul herstellen. Bei dem Lichtwellenleiter handelt es sich um einen Hohlleiter oder um eine im IR-Bereich transparente Lichtleitfaser. Beispielsweise ist die Faser aus Silberhalogenid gefertigt. Eine Faser aus diesem polykristallinen Material zeichnet sich dadurch aus, daß sie sehr biegsam, vibrationsstabil, im Querschnitt frei formbar und geeignet für hohe Temperaturen ist. Es versteht sich von selbst, daß der Lichtwellenleiter je nach Anwendungsfall auch als Faserbündel ausgebildet sein kann. Die einzelnen Fasern im Bündel haben entweder eine runde oder eine eckige, z. B. eine rechteckige Querschnittsfläche. Die Anordnung der einzelnen Fasern im Bündel bestimmt die optimale Anpassung an das Spektrometer.

Gemäß einer vorteilhaften Weiterbildung der erfindungsgemäßen Vorrichtung steuert die Regel-/Auswerteeinheit die Relativbewegung zwischen dem Detektorelement und dem Linear-Variablen Filter schrittweise. Selbstverständlich können das Detektorelement, der Ausgangabschnitt des Lichtwellenleiters und das Linear-Variable Filter auch kontinuierlich aneinander vorbeibewegt werden.

Eine Ausgestaltung der erfindungsgemäßen Vorrichtung sieht vor, daß das Detektorelement fest montiert ist und daß die Regel-/Auswerteeinheit das Linear-Variable Filter schrittweise oder kontinuierlich an dem Detektorelement vorbeibewegt. Alternativ wird vorgeschlagen, daß das Linear-Variable Filter fest montiert ist und daß die Regel-/Auswerteeinheit schrittweise oder kontinuierlich das Detektorelement an dem Linear-Variablen Filter vorbeibewegt.

In beiden Varianten ist gemäß einer bevorzugten Ausgestaltung der erfindungsgemäßen Vorrichtung eine gabelförmige Haltevorrichtung vorgesehen, in der das Detektorelement und der Ausgangsabschnitt des Lichtwellenleiters montiert sind. Zwecks der vorgeschlagenen Relativ-bewegung ist entweder die Haltevorrichtung bzw. das Detektorelement oder das Linear-Variable Filter auf einer Führungsschiene angeordnet. Insbesondere wird es im Zusammenhang mit der erfindungsgemäßen Vorrichtung als vorteilhaft angesehen, das Linear-Variable Filter oder das Detektorelement bzw. die Haltevorrichtung für das Detektorelement schrittweise oder kontinuierlich über einen Schrittmotor zu bewegen.

Eine vorteilhafte Weiterbildung der erfindungsgemäßen Vorrichtung schlägt vor, daß es sich bei dem Lichtwellenleiter, der das Meßlicht von dem Reflexionselement zu dem Linear-Variablen Filter leitet, um einen Querschnittswandler handelt. So kann beispielsweise durch eine lineare Reihe von einzelnen Lichtwellenleitern im Ausgangsabschnitt des Lichtwellenleiters eine Erhöhung des Lichtdurchsatzes durch das Linear-Variable Filter erreicht werden.

Darüber hinaus sieht eine Ausgestaltung der erfindungsgemäßen Vorrichtung einen zweiten Eingangsabschnitt des Wellenleiters vor, über den die Strahlung bzw. das Licht von der Strahlungs- / Lichtquelle durch ein teilverspiegeltes Reflexionselement als interner Referenzstrahl eingekoppelt wird. Insbesondere ist eine alternierende Strahlungsquelle mit ein oder zwei Strahlern vorgesehen, über die mit Hilfe des Detektors die sequenzielle Messung des Meß- und Referenzlichtes ermöglicht wird. Zu diesem Zweck ist der Wellenleiter gemäß einer Ausgestaltung als Faserweiche mit zwei Eingangsabschnitten und einem Ausgangsabschnitt ausgebildet. Selbstverständlich kann das Licht auch über ein anderweitiges optisches System auf das Linear-Variable Filter und nachfolgend das Detektorelement geführt werden.

Bevorzugt handelt es sich bei dem Detektorelement um einen Einzelelementdetektor, eventuell auch um einen Pixelzeilendetektor. Günstig ist der Einsatz von pyroelektrischen Detektoren, da diese keine zusätzliche Kühlung erforderlich machen und im Vergleich zu Halbleiterdetektoren kostengünstig sind.

Gemäß einer günstigen Ausgestaltung der erfindungsgemäßen Vorrichtung besteht das Reflexionselement aus einem hochreinen Halbleitermaterial. Bevorzugt sind hier Silizium oder Germanium zu nennen, die beide im IR-Bereich transparent sind. Erfindungsgemäß läßt sich das Reflexionselement sehr kostengünstig aus einem Wafer aus hochreinem Halbleitermaterial fertigen. Hierzu werden aus einem Wafer zylinderförmige Scheiben herausgebohrt. Eine zylinderförmige Scheibe hat beispielsweise eine Dicke von 2 bis 5 mm. An die zylinderförmigen Scheiben werden beidseitig Facetten geschliffen, so daß das Reflexionselement die Form eines Daches aufweist. Das Reflexionselement im Sondenrohr wird anschließend in z. B. eine Wechselarmatur bzw. in einen Prozeßanschluß für die Prozeßsonde eingepaßt, so daß das Meßmedium beim Ausbau der Sonde nicht aus dem Prozeß entweichen kann. Bekannte und im Zusammenhang mit der vorliegenden Erfindung verwendbare Wechselarmaturen werden übrigens von der Anmelderin unter der Bezeichnung 'CLEANFIT' angeboten und vertrieben (siehe auch DE 19948990 A1).
Es versteht sich von selbst, daß der Wafer bzw. das Reflexionselement im Prinzip aus jedem beliebigen im IR-Bereich durchlässigen Material gefertigt sein kann.

Gemäß einer vorteilhaften Weiterbildung der erfindungsgemäßen Vorrichtung ist zumindest der Bereich des Reflexionselements, der mit dem Meßmedium in Kontakt kommt, mit einer dünnen Diamantschicht versehen. Bevorzugt handelt es sich bei der Diamantschicht um eine monokristalline Beschichtung. Diese Diamantschicht macht das Reflexionselement selbst gegen aggressive und korrosive Medien inert. Bei geeigneter Wahl des internen Reflexionswinkels vom Grundkörper (der z.B. aus einem Halbleitermaterial besteht) läßt sich durch das Aufbringen der Diamantschicht ein interner Reflexionswinkel einstellen, wobei der ATR-Effekt ausgenützt werden kann. Eine spezielle Geometrie des Reflexionselements erlaubt eine in hohem Maße kompakte Ausgestaltung, in dem durch eine Zwischenreflexion an der Ein-/Auskoppelfläche zwei produktberührende Reflexionen in dem beschichteten Reflexionselement auftreten.

Um systematische Meßfehler auszuschließen, wird neben der spektrometrischen Untersuchung des Meßstrahls parallel eine Untersuchung eines Referenzstrahls durchgeführt. Der Referenzstrahl nimmt einen analogen Weg durch die ATR-Sonde wie der Meßstrahl, allerdings wird hierbei durch entsprechende Beschichtungen der Auftreffstellen im Reflexionselement sichergestellt, daß kein Referenzlicht in das optisch dünnere Medium, sprich in das eigentliche Meßmedium, austreten kann. Erreicht wird die Totalreflexion ohne den Abschwächungseffekt beispielsweise durch das partielle Aufbringen einer metallischen Schicht. Bevorzugt werden daher die Auftreffstellen des Referenzlichts auf der dem Meßmedium zugewandten Seitenfläche des Reflexionselements mit einer Metallschicht bedampft.

Um Intensitätsverluste des Meßlichts bzw. des Referenzlichts möglichst bei der Ein-/ und Auskopplung des Lichtes im Reflexionselement weitgehend zu vermeiden, trägt die dem Meßmedium abgewandte Fläche des Reflexionselements bevorzugt eine Anti-Reflexschicht.

Gemäß einer vorteilhaften Weiterbildung der erfindungsgemäßen Vorrichtung ist das Reflexionselement derart dimensioniert und ausgestaltet, daß das Meßlicht bzw. das Referenzlicht bis zu sieben Reflexionen in dem Reflexionselement erfährt. Die tatsächliche Anzahl Reflexionen läßt sich bei dieser Ausführungsform durch die Länge des Reflexionselements festlegen. Hierdurch werden insbesondere schwache Absorptionsbanden vom Meßmedium besser erfaßt, als dies bei einer niedrigeren Anzahl von Reflexionen möglich ist. Die Wellenlänge des Meßlichts bzw. des Referenzlichts liegt übrigens vorzugsweise im Wellenlängenbereich von 5 - 14 µm.

Gemäß einer bevorzugten Ausgestaltung handelt es sich bei dem Reflexionselement um ein Mikroprisma. Bevorzugt ist das Mikroprisma aus Diamant gefertigt; jedoch sind auch andere Materialien verwendbar. Der Aufbau einer Infrarot-Mikromeßsonde wird übrigens in der DE 100 34 220 A1 ausführlich beschrieben. Die in dieser Offenlegungsschrift beschriebenen Sonden sind in Verbindung mit der vorliegenden Erfindung einsetzbar, allerdings wird im Gegensatz zu DE 100 34 220 A1 die Verwendung von kegelförmige Miniprismen bevorzugt und besonderen Wert auf die Anordnung der Lichtwellenleiter im Bündel gelegt.

Die Ausgestaltungen Reflexionselements haben den entscheidenden Vorteil, daß der einfallende Strahl und der ausfallende Strahl von Meßlicht, aber auch vom Referenzlicht, zueinander parallele Strahlengänge aufweisen. Bei entsprechender gleichartiger Dimensionierung der unterschiedlichen Reflexionselemente (ATR und Transmission) auf der Ein- / und Auskoppelseite kann die Sonde schon durch Austausch des Reflexionselements an die jeweilige Meßaufgabe angepaßt werden.

Selbstverständlich ist es möglich in der ersten Ausgestaltungsform des Gerätes, die zumindest eine Strahlungs- bzw. Lichtquelle in unmittelbarer Nähe des Reflexionselements zu plazieren und somit keine Lichtwellenleiter auf der Einkoppelseite zu verwenden. Bevorzugt handelt es sich bei der Strahlungsquelle übrigens um eine elektronisch gepulste Lichtquelle ohne bewegliche Bauteile. Verwendet werden kann natürlich auch ein mechanischer Chopper.

Die Erfindung wird anhand der nachfolgenden Zeichnungen näher erläutert. Es zeigt:
- Fig. 1:: eine schematische Darstellung einer ersten Ausgestaltung der erfindungsgemäßen Vorrichtung;
- Fig. 2a:: eine schematische Darstellung eines Querschnittswandlers mit Faserweiche;
- Fig. 2b:: eine Draufsicht auf den in Fig. 2a dargestellten Ein- und Ausgangsabschnitten des Querschnittswandlers;
- Fig. 3a:: eine Draufsicht auf eine erste Ausgestaltung des ATR-Reflexionselements;
- Fig. 3b:: einen Querschnitt durch die in Fig. 3a gezeigte Ausgestaltung gemäß der Kennzeichnung A-A;
- Fig. 3c:: eine perspektivische Ansicht der in Fig. 3a gezeigten Ausgestaltung;
- Fig.: 3d: eine schematische Darstellung einer Ausgestaltung der Prozeßabdichtung des erfindungsgemäßen ATR-Reflexionselements;
- Fig. 4a:: eine Draufsicht auf eine zweite Ausgestaltung des ATR-Reflexionselements;
- Fig. 4b:: eine Seitenansicht der in Fig. 4a gezeigte Ausgestaltung gemäß der Kennzeichnung A-A;
- Fig. 4c:: einen Querschnitt gemäß der Kennzeichnung A-A in Fig. 4b;
- Fig. 4d:: perspektivische Ansichten der in Fig. 4a gezeigten Ausgestaltung;
- Fig. 5a:: eine Draufsicht auf eine dritte Ausgestaltung des ATR-Reflexionselements;
- Fig. 5b:: eine Seitenansicht der in Fig. 5a gezeigten Ausgestaltung gemäß der Kennzeichnung A-A,
- Fig. 5c:: einen Querschnitt gemäß der Kennzeichnung A-A in Fig. 5b;
- Fig. 5d:: eine perspektivische Ansicht der in Fig. 5a gezeigten Ausgestaltung; und
- Fig. 6:: eine schematische Darstellung einer zweiten Ausführungsform der erfindungsgemäßen Vorrichtung;
- Fig. 7:: eine schematische Darstellung einer dritten Ausführungsform der erfindungsgemäßen Vorrichtung;
- Fig. 8:: eine schematische Darstellung von einem Querschnittswandler, der bevorzugt mit denen in den Figuren Fig. 6 und Fig. 7 gezeigten Ausführungsformen zum Einsatz kommt;
- Fig. 9:: eine schematische Darstellung des Steckverbinders zur Montage der Lichtwellenleiter an das LVF-Spektrometer und
- Fig. 10:: eine schematische Darstellung der Meßpitze einer ATR-Sonde mit einem Mikroprisma.

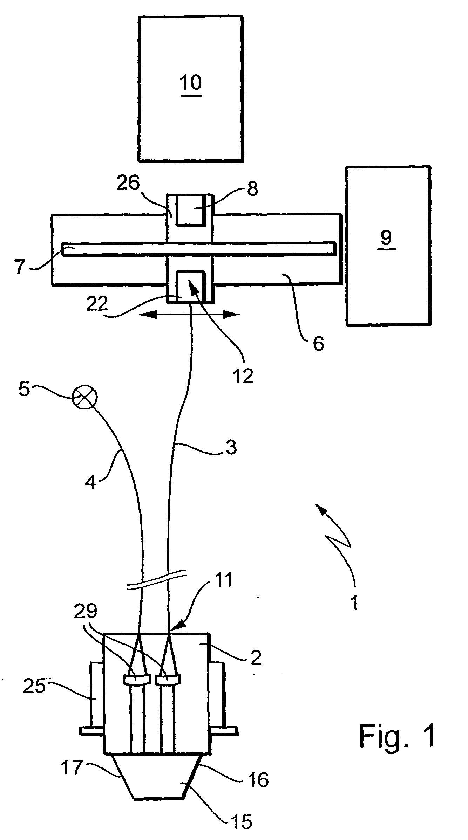

Fig. 1 zeigt eine schematische Darstellung einer ersten Ausgestaltung der erfindungsgemäßen Vorrichtung 1. Die ATR-Sonde 2 besteht aus der Prozeßarmatur 25 und dem Reflexionselement 15. Bei der Prozeßarmatur 25 handelt es sich beispielsweise um eine Wechselarmatur, wie sie von der Anmelderin unter der Bezeichnung 'CLEANFIT' vertrieben wird. Ein interessanter Aspekt der Erfindung richtet sich - wie nachfolgend noch näher beschrieben wird - auf verschiedenen Geometrien des Reflexionselements 15. Unabhängig von der gewählten Geometrie wird das Reflexionselement 15 durch die Prozeßarmatur 25 mechanisch geschützt, kommt aber dennoch mit dem Meßmedium in unmittelbaren Kontakt.

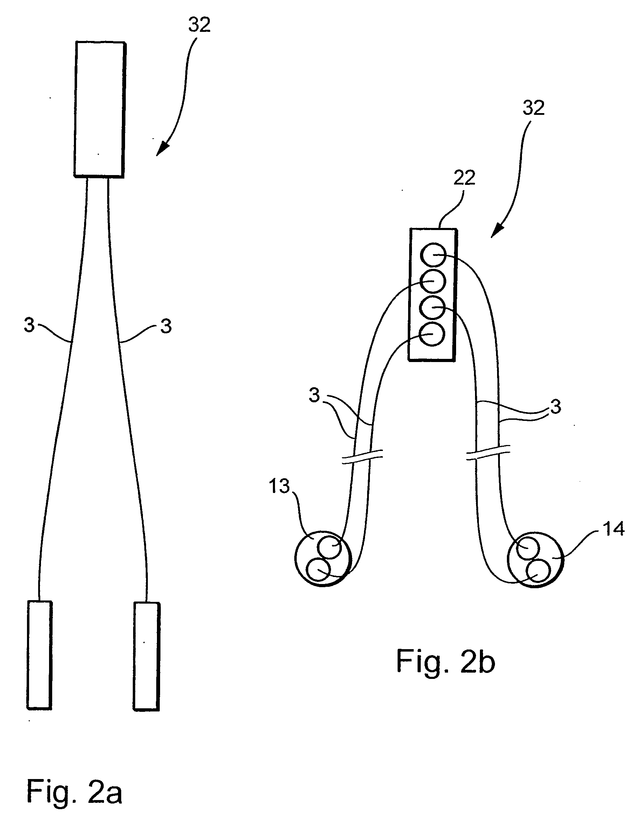

Das Meßlicht und das Referenzlicht, welche bevorzugt von zwei Lichtquellen 5 stammen, werden über den Lichtwellenleiter 4 auf die ATR-Sonde 2 eingekoppelt. Bei dem Lichtwellenleiter 4 ebenso wie bei dem Lichtwellenleiter 3 handelt es sich bevorzugt um Lichtfaserbündel. Entsprechende Ausgestaltungen sind in den Figuren Fig. 2a (Seitenansicht) und Fig. 2b (Draufsicht) dargestellt. Jede anderweitige Einkopplung ist selbstverständlich gleichfalls möglich. Auch kann die Lichtquelle 5 unmittelbar vor dem Reflexionselement 15 positioniert werden, wodurch der Lichtwellenleiter 4 entfallen kann.

Im Bereich des Lichtausgangsabschnitts 12 des Lichtwellenleiters 3 befindet sich ein Querschnittswandler 22. Über den Querschnittswandler 22 werden die einzelnen Lichtfasern für das Meßlicht und das Referenzlicht auf eine Vielzahl übereinander angeordneter Fasern geführt. Die Intensität des über das Linear-Variable Filter 7 geführten Meß- bzw. Referenzlichts wird anschließend von dem Detektorelement 8 erfaßt.

Der Querschnittswandler 22 und das Detektorelement 8 sind auf einer Haltevorrichtung 26 befestigt, die an einer Führungsschiene 6 bewegbar angeordnet ist. Sukzessive wird die Haltevorrichtung 26 über den Antrieb 9 an dem Linear Variablen Filter 7 vorbeigeführt. Linear-Variable Filter sind bekannt; verwiesen wird hier auf die US-PS 5,920,069.

Bei dem Antrieb 9 handelt es sich z.B. um einen Schrittmotor, der über eine in der Fig. 1 nicht gesondert dargestellte Spindel die Haltevorrichtung 26 bewegt. Das Detektorelement 8 mißt in jeder angefahrenen Position die Intensitätswerte von Meßlicht und Referenzlicht. Anhand dieser Werte erstellt die Regel/Auswerteeinheit 10 das Spektrum des Meßmediums, das mit dem Reflexionselement 15 in Kontakt ist. Die spektrale Verteilung liefert Information darüber, welche Substanz/Substanzen in dem Meßmedium in welcher Konzentration vorhanden ist/sind. Die Auswertung erfolgt über die bekannten Algorithmen.

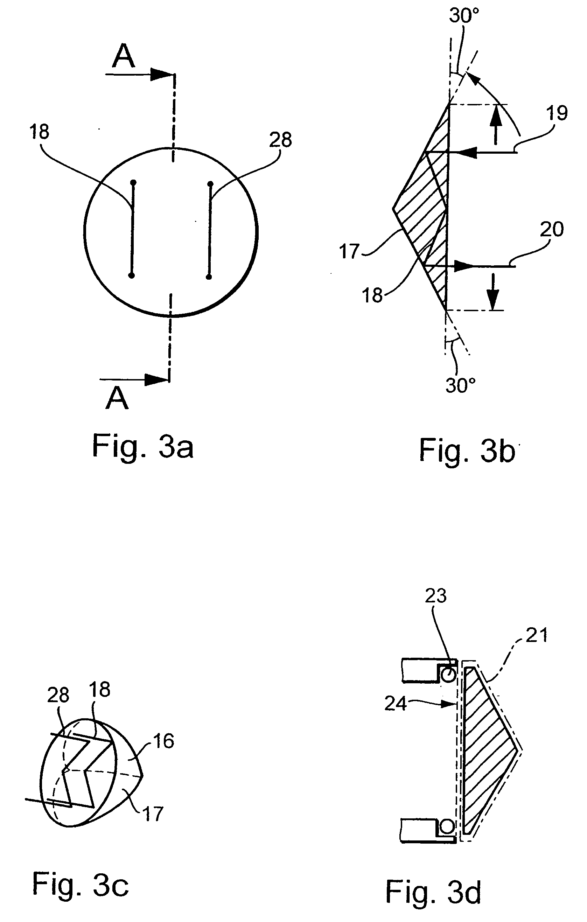

In den nachfolgenden Figuren Fig. 3, Fig. 4, Fig. 5 sind unterschiedliche Varianten des Reflexionselements 15 der ATR-Sonde 2 dargestellt. Es versteht sich von selbst, daß dieses Reflexionselement 15 nicht nur in Verbindung mit der in Fig. 1 beschriebenen erfindungsgemäßen Vorrichtung 1 einsetzbar ist. Vielmehr kann das Reflexionselement 15 in der Prozeßsonde 2 an jeden beliebigen Spektrometer/Spektrograph, das/der über eine Lichtwellenleiter-ankopplung verfügt, angeschlossen werden.

Wie bereits gesagt, besteht das Reflexionselement 15 aus einem im IR-Bereich in hohem Maße transparenten Material. Bevorzugt handelt es sich bei dem Material um ein Halbleitermaterial, z.B. um hochreines Silizium oder Germanium. Um die Resistenz des Halbleitermaterials gegen aggressive oder korrosive Meßmedien zu erhöhen, sind zumindest die mit dem Meßmedium in Kontakt kommenden Bereiche des Reflexionselements 15 mit einer Diamantschicht 21 versehen. Eine entsprechende Ausführungsform ist in Fig. 3d dargestellt. Fig. 3d zeigt das Reflexionselement 15 übrigens im Querschnitt.

Die Reflexionselemente 15 bzw. die ATR-Prismen werden bevorzugt als zylinderförmige Scheiben aus einem Halbleiter-Wafer herausgebohrt. Anschließend werden beidseitig an die zylinderförmige Scheibe Facetten 16, 17 geschliffen, so daß das Reflexionselement 15 auf der dem Meßmedium zugewandten Seite die Form eines Satteldaches aufweist. Die entsprechende Ausgestaltung des Reflexionselements 15 ist z. B. in den Figuren Fig. 3a, Fig. 3b und Fig. 3c dargestellt.

In diesen Figuren ist darüber hinaus der Strahlengang 18 des Meßlichts dargestellt. Das von der Lichtquelle 5 kommende kollimierte Lichtbündel wird in den Bereich der Facette 16 des Reflexionselements 15 reflektiert. An der Grenzfläche zum optisch dünneren Meßmedium hin erfährt das Meßlicht bei Kontakt mit dem Meßmedium eine erste geschwächte Totalreflexion; eine zweite geschwächte Totalreflexion erfolgt an der Facette 17. Die Totalreflexion an der vom Meßmedium abgewandten Ein-/Auskoppelfläche des Reflexionselements 15 erfolgt näherungsweise ungeschwächt. Dies ist eine Folge des Einfalls- bzw. Ausfallswinkels, der im gezeigten Fall näherungsweise 60° beträgt. Darüber hinaus kann die Ein-/Auskoppelfläche mit einer Anti-Reflexschicht 24 versehen sein.

Die Facetten 16, 17 sind derart geschliffen, daß der Einfalls- und der Ausfallswinkel für die Totalreflexion bei senkrechtem Einfall des Meßlichts auf die Ein-/ Auskoppelfläche ca. 30° beträgt. Weiterhin ist im gezeigten Fall der Durchmesser des Reflexionselements 15 so dimensioniert, daß das Meßlicht innerhalb des Reflexionselements 15 lediglich drei Reflexionen erfährt. Durch den hiermit verbundenen kurzen Laufweg des Meßlichts innerhalb des Reflexionselements 15 werden die Absorptionsverluste im Material des Prismas sehr gering gehalten.

Es versteht sich von selbst, daß jede anderweitige Form des Facettenschliffs möglich ist, solange der Grenzwinkel für die Totalreflexion nicht unterschritten wird. Ausgestaltungen des Reflexionselements 15 schlagen vor, daß weitere geschwächte und ungeschwächte Totalreflexionen des Meßlichts bzw. des Referenzlichts an den Grenzflächen des Reflexionselements 15 auftreten können. Bei der konkreten Ausgestaltung des Reflexionselements 15 wird natürlich einerseits eine Optimierung in Richtung Lichtausbeute und andererseits eine Optimierung in Richtung Meßgenauigkeit (Anzahl der Reflexionen) anvisiert.

Der große Vorteil der verschiedenen Ausgestaltungen des Reflexionselements ist-wie auch die Figuren Fig. 3, Fig. 4 und Fig. 5 verdeutlichen - darin zu sehen, daß das einfallende und das ausfallende Meßlicht (bzw. das Referenzlicht) parallel zueinander verlaufen. Hierdurch wird der mechanische Aufbau der Kollimieroptik 29 vereinfacht.

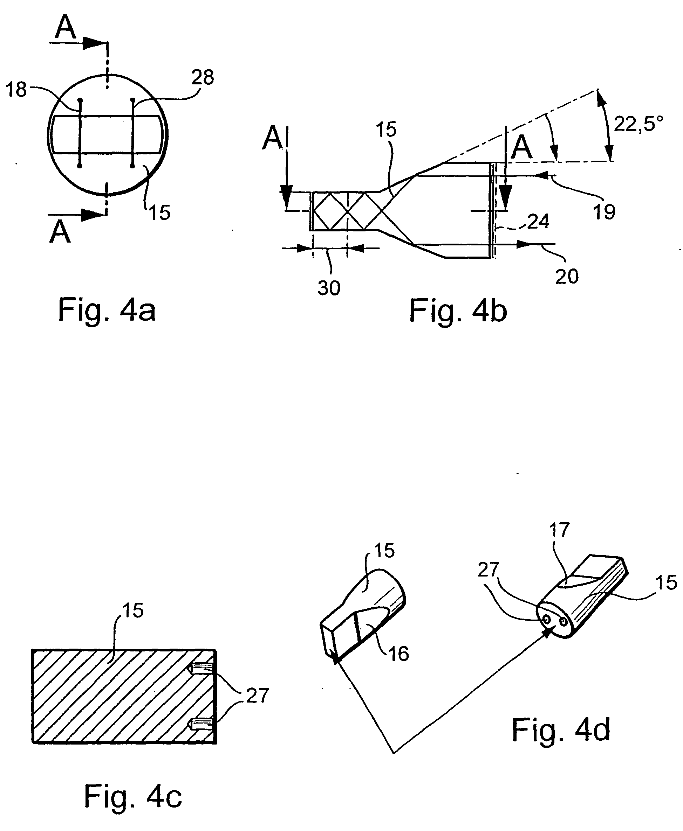

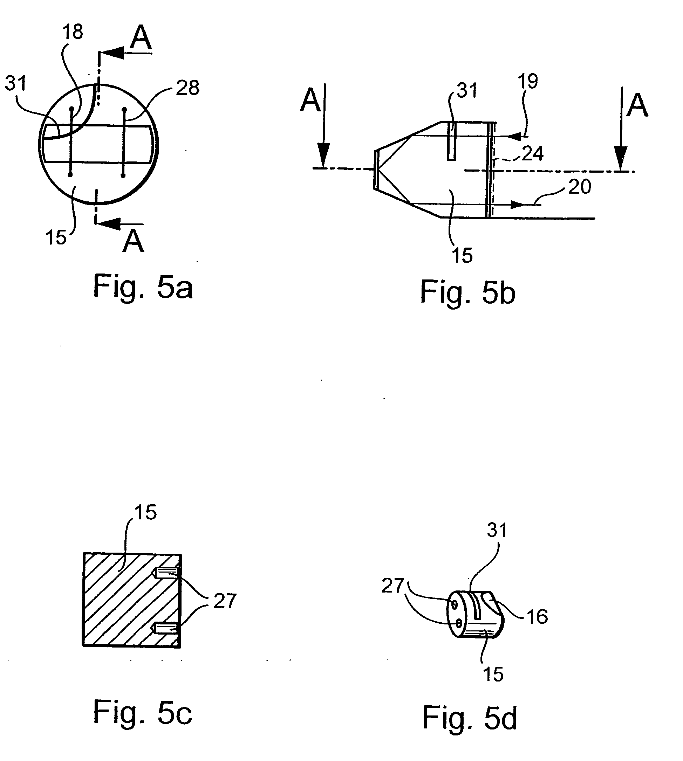

Die in den Figuren Fig. 4 und Fig. 5 dargestellte Ausführungsform des Reflexionselements 15 unterscheidet sich von der in Fig. 3 dargestellten Ausgestaltung dadurch, daß das in Fig. 4 dargestellte ATR-Reflexionselement 15 eine höhere Anzahl Reflexionen bei einem internen Reflexionswinkel von 45° aufweist. Die Anzahl der Reflexionen kann über die Verlängerungsdistanz 30 des Prismas gesteigert werden.

Fig. 5 zeigt ein Reflexionselement 15 mit einem seitlichen Meßspalt 31. Diese Ausgestaltung entspricht somit einer Transmissionsanordnung. Die zwei Bohrungen 27 in der Ein-/ Auskoppelfläche (Figuren 4 und 5) sind Teil einer nicht gesondert dargestellten Verdrehsicherung, die das Reflexionselement 15 nach Befestigung in der Prozeßsonde 2 in der korrekten Lage zur Kollimieroptik 29 fixiert. Zwecks Verdrehsicherung werden z. B. entsprechend geformte Stifte in die Borungen 27 eingebracht. Es versteht sich von selbst, daß auch jede andere Art einer Verdrehsicherung eingesetzt werden kann, solange sie den Strahlengang 18, 28 von Meßlicht und Referenzlicht nicht stört.

In Fig. 3a, 3c, 4a und 5a ist stilisiert neben dem Strahlengang 18 des Meßlichts auch der Strahlengang 28 des Referenzlichts eingezeichnet. Während das Meßlicht in den Bereichen der Facetten 16, 17 jeweils eine geschwächte Totalreflexion erfährt, sind die entsprechenden Bereiche für das Referenzlicht so ausgestaltet, daß das Referenzlicht bei der Reflexion an den Facetten 16, 17 keine Schwächung erfährt. Hierzu sind die entsprechenden Bereiche beispielsweise mit einer metallische Beschichtung versehen, die für IR-Strahlung undurchlässig ist.

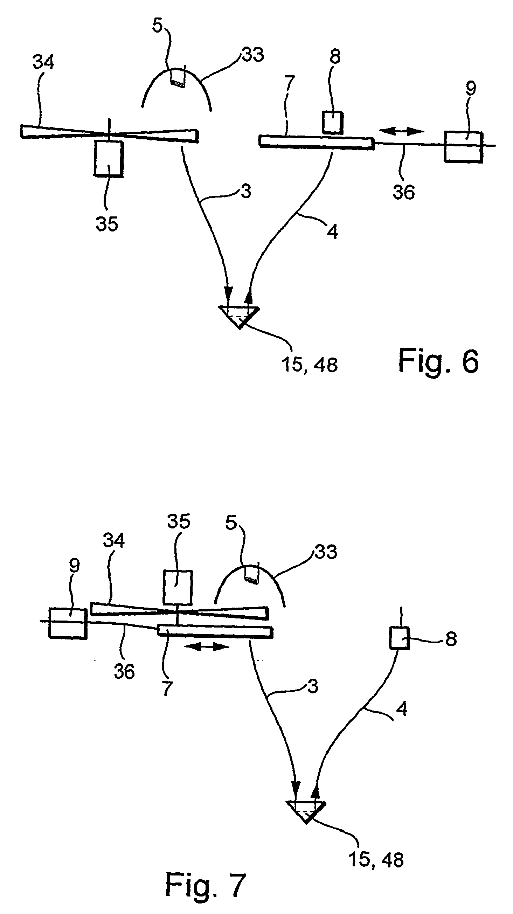

Fig. 6 zeigt eine schematische Darstellung einer zweiten Ausführungsform der erfindungsgemäßen Vorrichtung. Die Strahlung bzw. das Licht der Strahlungsquelle / Lichtquelle 5 wird über einen Ellipsoidspiegel 33 auf den Lichteingangsabschnitt des Wellenleiters 3 fokussiert. Zur Modulation des Meßlichts und des Reflexionslichts wird ein Chopper 34 eingesetzt, der von einem Choppermotor 35 gedreht wird. Über den Lichtwellenleiter 3 wird das Licht zu dem Reflexionselement 15 geleitet. Bei dem Reflexionselement 15 handelt es sich im gezeigten Fall um ein Mikroprisma 48, das aus Diamant gefertigt ist. Bevorzugt hat das Mikroprisma 48 die in der Fig. 6 gezeigte Kegelform. Anschließend wird die Strahlung, die die Information über die Zusammensetzung des Meßmediums beinhaltet, über den Wellenleiter 4 in Richtung auf das Linear-Variable Filter 7 und das Detektorelement 8 geleitet. Im dargestellten Fall ist das Detektorelement 8 fest montiert, während das Linear-Variable Filter über den Antrieb 9 und die Spindel 36 schrittweise oder quasi-kontinuierlich an dem Detektorelement 8 vorbeibewegt wird. Auf diese Art und Weise wird sukzessive das Spektrum der Strahlung abgescannt. Die Auswertung des Spektrums erfolgt über die Regel-/Auswerteeinheit 10, die in der Fig. 6 nicht gesondert dargestellt ist.

In Fig. 7 ist eine bevorzugte dritte Ausführungsform der erfindungsgemäßen Vorrichtung skizziert. Diese Ausgestaltung zeichnet sich ebenso wie die in Fig. 6 dargestellte Ausgestaltung durch einen besonders einfachen und daher kostengünstigen Aufbau aus. Das von der Lichtquelle 5 ausgesendete und über den Chopper 34 gepulste Licht wird über den Ellipsoidspiegel 33 auf den Eingangsabschnitt des Wellenleiters 3 fokussiert. Zwischen der Strahlungsquelle 5 und dem Eingangsabschnitt des Wellenleiters 3 ist das Linear-Variable Filter 7 positioniert. Das Linear-Variable Filter wird über den Antrieb 9 und die Spindel 36 schrittweise zwischen der Strahlungsquelle 5 und dem Eingangsabschnitt des Wellenleiters 3 bzw. dem Reflexionselement 15 hindurchbewegt. Nach Durchgang der Strahlung durch das Linear-Variable Filter 7 ist das Licht monochromatisch. Dieses monochromatische Licht wird dem Reflexionselement 15 über den Lichtwellenleiter 3 zugeführt. Das in dem Reflexionselement 15 reflektierte Licht wird über den Lichtwellenleiter 4 in das Detektorelement 8 geführt.

Als vorteilhaft ist bei dieser Ausgestaltung anzusehen, daß der Lichtwellenleiter 4 direkt und damit ohne Verluste am Detektorelement 8 angesetzt werden kann. Die Ankopplung erfolgt bevorzugt über das sog. Pig-Tailing. Hierdurch läßt sich eine höhere Lichtausbeute erreichen. Folglich läßt sich das Signal/Rausch-Verhältnis der zur Verfügung gestellten Spektren weiter steigern, wodurch sich die Nachweisgrenze für Substanzen im Meßmedium am Reflexionselement 15 weiter reduziert.

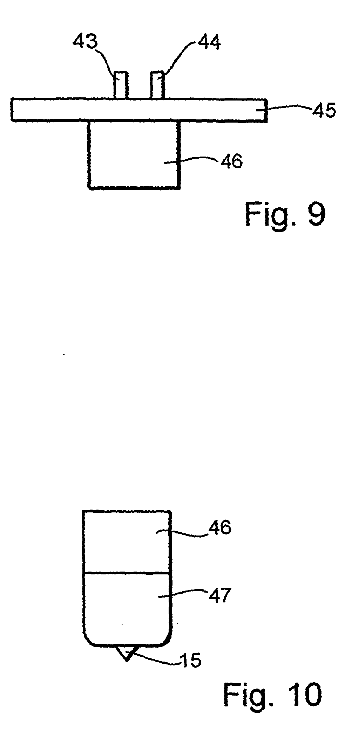

Bevorzugt handelt es sich auch bei der in Fig. 7 gezeigten Ausgestaltung bei dem Reflexionselement 15 um ein ATR-Kristall. Als ATR-Kristall wird bevorzugt ein Mikroprisma 48 aus Diamant eingesetzt. In Fig. 10 ist ein Prisma aus Diamant gezeigt, das an der Spitze einer Prozeßsonde 2 befestigt ist. Die Sonde 2 ist im gezeigten Fall so ausgestaltet, daß sie die Hygiene-Anforderungen der Pharma- und Lebensmittelindustrie berücksichtigt. Insbesondere besitzt die Sonde 2 abgerundete Kanten. Das Sondenrohr 46 mit der Sondenspitze 47 ist vorzugsweise aus Titan, Hastelloy oder PEEK gefertigt. Der Diamant bzw. das Mikroprisma 48 ist in Abhängigkeit von der zu vermessenden Substanz in den Sondenkörper eingelötet oder eingeklebt. Die Sonde 2 ist so gefertigt, daß sie in bestehende Wechselarmaturen eingesetzt werden kann, die von der Anmelderin gebotenen und vertrieben werden.

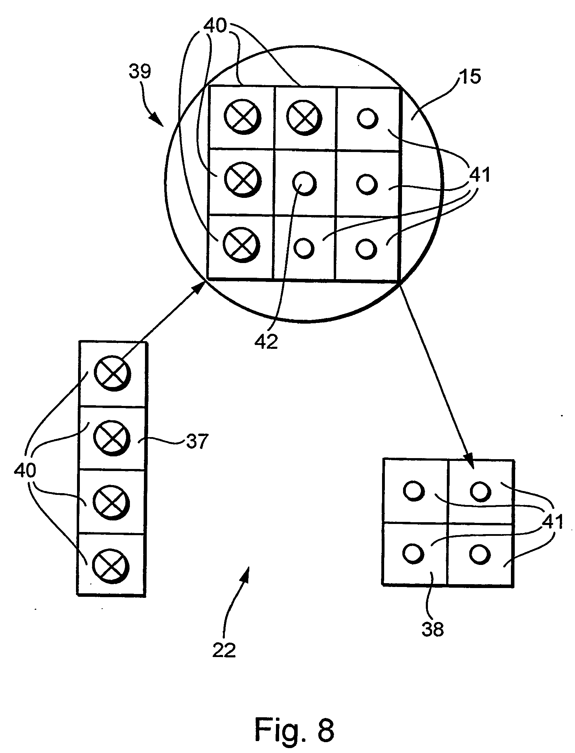

In der Fig. 8 ist eine schematische Darstellung eines Querschnittswandlers 22 zu sehen, der bevorzugt mit der in Fig. 7 gezeigten Ausgestaltung zum Einsatz kommt. Der Querschnittswandler 22 setzt sich aus drei Teilelementen 37, 38, 39 zusammen. Der Querschnittswandler 37 ist in Richtung des Linear-Variablen Filters 7 angeordnet und besteht aus vier in Reihe angeordneten Fasern 40, die das monochromatische Licht in Richtung auf das Mikroprisma 48 führen. Der Querschnittswandler 38, der in Richtung des Detektorelements 8 angeordnet ist, besteht gleichfalls aus vier Fasern 41, die in quadratischer Form positioniert sind. Der Querschnittwandler 39, der unmittelbar vor der kreisförmigen Stirnfläche des bevorzugt kegelförmigen Mikroprismas 48 zu finden ist, hat beispielsweise die in der Fig. 8 gezeigte Ausgestaltung. Die Fasern 40, 41 der Lichtwellenleiter 3, 4 haben übrigens bevorzugt den in der Fig. 8 dargestellten rechteckigen Querschnitt. Selbstverständlich können in Verbindung mit der Erfindung auch Fasern 40, 41 mit rundem Querschnitt eingesetzt werden.

Bevorzugt hat das Reflexionselement 15 übrigens die dargestellte konische Form. Diese hat den Vorteil, daß die Orientierung des quadratischen Querschnittswandlers 39 rotationsinvariant ist. Natürlich ist auch eine quadratische oder mehreckige, z.B. achteckige Basisform des internen Reflexionselements 48 möglich; allerdings muß dann der quadratische Querschnittswandler 39 nach der Grundfläche des Reflexionselements 48 ausgerichtet werden.

Wie in Fig. 9 zu sehen, sind der Eingangsabschnitt und der Ausgangsabschnitt der Prozeßsonde 2 in einem Stecker integriert. Daher ist es möglich, die Sonde 2 auf einfache Weise mit dem Linear-Variablen Filter 7 zu verbinden. Bevorzugt erfolgt die Befestigung des Eingangs- bzw. Ausgangsabschnitts der Wellenleiter 3, 4 an dem LVF-Spektrometer über Ferrulen 43, 44.

### Bezugszeichenliste

- 1: erfindungsgemäße Vorrichtung
- 2: Prozeßsonde
- 3: Erster Wellenleiter / Faser(bündel)
- 4: Zweiter Wellenleiter / Faser(bündel)
- 5: Strahlungsquelle / Lichtquelle
- 6: Führungsschiene
- 7: Linear-Variables Filter
- 8: Detektorelement
- 9: Antrieb
- 10: Regel-/Auswerteeinheit
- 11: Eingangsabschnitt / Lichtwellenleiter
- 12: Ausgangsabschnitt / Lichtwellenleiter
- 13: Erste Einkopplung / Lichtwellenleiter
- 14: Zweite Einkopplung / Lichtwellenleiter
- 15: Reflexionselement
- 16: Facette
- 17: Facette
- 18: Strahlengang des Meßlichts
- 19: Einfallender Lichtstrahl
- 20: Ausfallender Lichtstrahl
- 21: Diamant-Beschichtung
- 22: Querschnittswandler
- 23: Dichtungsring
- 24: Anti-Reflexschicht
- 25: Wechselarmatur
- 26: Haltevorrichtung
- 27: Bohrung (für Paßstifte)
- 28: Strahlengang des Referenzlichts
- 29: Kollimieroptik
- 30: Verlängerungsdistanz
- 31: Meßspalt
- 32: Faserweiche
- 33: Fokussiereinheit / Ellipsoidspiegel
- 34: Chopper
- 35: Choppermotor
- 36: Spindel
- 37: Anordnung der Fasern im Querschnittswandler (LVF-Ende)
- 38: Anordnung der Fasern im Querschnittswandler (Detektor- bzw. Strahlerende)
- 39: Anordnung der Fasern im Querschnittswandler (Am Reflexionselement)
- 40: Sendestrahlung
- 41: Empfangsstrahlung
- 42: Konusspitze (abgeschliffen)
- 43: Ferrule
- 44: Ferrule
- 45: Flansch für das Spektrometergehäuse
- 46: Rohr / Sondenkörper
- 47: Sondenspitze
- 48: Mikroprisma

## Patentansprüche

1. Vorrichtung zur IR-spektrometrischen Analyse eines festen, flüssigen oder gasförmigen Mediums mit einer Prozeßsonde (2), die ein Reflexionselement (15) aufweist, mit einem Linear-Variablen Filter (7), zumindest einem Detektorelement (8) und einer Regel-/Auswerteeinheit (10),
wobei zumindest eine Strahlungsquelle (5) vorgesehen ist, deren elektromagnetische Strahlung in das Reflexionselement (15) eingekoppelt wird,
wobei zumindest ein Wellenleiter (3) mit einem Eingangsabschnitt (11) und einem Ausgangsabschnitt (12) vorgesehen ist,
wobei die elektromagnetische Strahlung über den Ausgangsabschnitt (12) des Wellenleiters (3) in zumindest einen definierten Bereich des Linear-Variablen Filters (7) geleitet wird,
wobei das Detektorelement (8) und das Linear-Variable Filter (7) über näherungsweise die Länge des Linear-Variablen Filters (7) relativ zueinander bewegbar angeordnet sind und
wobei die Regel-/Auswerteeinheit (10) anhand der von dem Detektorelement (8) gelieferten Meßwerte das Spektrum des Mediums bestimmt.

2. Vorrichtung zur IR-spektrometrischen Analyse eines festen, flüssigen oder gasförmigen Mediums mit einer Prozeßsonde (2), die ein Reflexionselement (15) aufweist, mit einem Linear-Variablen Filter (7), zumindest einem Detektorelement (8) und einer Regel-/Auswerteeinheit (10),
wobei zumindest eine Strahlungsquelle (5) vorgesehen ist, deren elektromagnetische Strahlung in zumindest einen definierten Bereich des Linear-Variablen Filters (7) fokussiert wird,
wobei zumindest ein Wellenleiter (4) vorgesehen ist, über den die elektromagnetische Strahlung nach Durchgang durch das Linear-Variable Filter (6) in das Reflexionselement (15) eingekoppelt wird,
wobei die Strahlungsquelle (5) und das Linear-Variable Filter (7) über näherungsweise die Länge des Linear-Variablen Filters (7) relativ zueinander bewegbar angeordnet sind,
wobei das Detektorelement (8) die elektromagnetische Strahlung nach Durchgang durch das Reflexionselement (15) empfängt und
wobei die Regel-/Auswerteeinheit (10) anhand der von dem Detektorelement (8) gelieferten Meßwerte das Spektrum des Mediums bestimmt.

3. Vorrichtung nach Anspruch 1 oder 2,
wobei die Regel-/Auswerteeinheit (10) die Relativbewegung zwischen dem Detektorelement (8) und dem Linear-Variablen Filter (7) bzw. zwischen der Strahlungsquelle (5) und dem Linear-Variablen Filter (7) schrittweise oder kontinuierlich steuert.

4. Vorrichtung nach Anspruch 1 oder 2,
wobei das Detektorelement (8) fest montiert ist und
wobei die Regel-/Auswerteeinheit (10) das Linear-Variable Filter (7) schrittweise an dem Detektorelement (8) vorbeibewegt,
bzw. wobei die Strahlungsquelle (5) fest montiert ist und
wobei die Regel-/Auswerteeinheit (10) das Linear-Variable Filter (7) schrittweise oder kontinuierlich an dem Detektorelement (8) vorbeibewegt

5. Vorrichtung nach Anspruch 1 oder 2,
wobei das Linear-Variable Filter (7) fest montiert ist und
wobei die Regel-/Auswerteeinheit (10) schrittweise das Detektorelement (8) an dem Linear-Variablen Filter (7) vorbeibewegt,
bzw, wobei das Linear-Variable Filter (7) fest montiert ist und wobei die Regel-/Auswerteeinheit (10) das Linear-Variable Filter (7) schrittweise oder kontinuierlich an der Strahlungsquelle (5) vorbeibewegt.

6. Vorrichtung nach Anspruch 1 oder 2,
wobei eine Haltevorrichtung (26) vorgesehen ist, in der das Detektorelement (8) und der Lichtausgangsabschnitt (12) bzw. die Strahlungsquelle (5) und der Lichteingangsabschnitt oder das Linear Variable Filter (7) montiert sind/ist.

7. Vorrichtung nach Anspruch 6,
wobei die Haltevorrichtung (26) bzw. das Detektorelement (8) bzw. die Strahlungsquelle (5) oder das Linear-Variable Filter (7) auf einer Führungsschiene (6) angeordnet ist.

8. Vorrichtung nach Anspruch 1 oder 7,
wobei es sich bei dem Ausgangsabschnitt (12) und/oder dem Eingangsabschnitt um einen Querschnittswandler (22) handelt.

9. Vorrichtung nach Anspruch 3, 4, 5 oder 6,
wobei ein Antrieb (9) vorgesehen ist, über den das Linear-Variable Filter (7) oder das Detektorelement (8) bzw. die Strahlungsquelle (5) bzw. die Haltevorrichtung (26) für das Detektorelement (8) bzw. die Strahlungsquelle (5) schrittweise oder kontinuierlich bewegt wird.

10. Vorrichtung nach Anspruch 1,
wobei ein erster Lichtwellenleiter (3) eine Faserweiche (32) ist, über die die Meßstrahlung und eine Referenzstrahlung zum Reflexionselement (15) geführt werden und wobei der Meßstrahl und der Referenzstrahl zum Linear-Variablen Filter (7) geleitet werden.

11. Vorrichtung nach Anspruch 1,
wobei es sich bei dem Detektorelement (8) um einen pyroelektrischen Detektor, bevorzugt um einen Thermopile- oder einen MCT- Detektor, oder um eine Detektorzeile handelt.

12. Vorrichtung nach Anspruch 1 oder 2,
wobei das Reflexionselement (15) aus einem hochreinen Halbleitermaterial gefertigt ist.

13. Vorrichtung nach Anspruch 1 oder 2,
wobei das Reflexionselement (15) aus einem hochreinen Halbleitermaterial oder anderem IR-transmitiven Material gefertigt ist, auf dem eine dünne Diamantschicht (21) aufgebracht ist.

14. Vorrichtung nach Anspruch 1 oder 2,
wobei es sich bei dem Reflexionselement (15) um ein Mikroprisma (48) handelt, das bevorzugt aus Diamant gefertigt ist.

15. Vorrichtung nach einem der Ansprüche 10-14, wobei das
Reflexionselement (15) derart dimensioniert und ausgestaltet ist, daß der Strahlengang des Meßlichts (18) bzw. Referenzlichts (28) eine Vielzahl Reflexionen in dem Reflexionselement (15) erfährt, wobei die Anzahl der Reflexionen über die Länge des Reflexionselementes (15) festlegbar ist.

16. Vorrichtung nach Anspruch 14 oder 15,
wobei das Reflexionselement (15) eine runde, quadratische oder polygonale Querschnittsfläche aufweist.

17. Vorrichtung nach Anspruch 16,
wobei der erste Wellenleiter (3) aus mehreren Fasern (40; 41) besteht und auf der Seite des Linear-Variablen Filters (7) einen bevorzugt linearen Faserquerschnittswandler (37) und auf der Seite des Reflexionselements (15) einen bevorzugt L-förmigen Querschnittswandler (39) aufweist, und
wobei ein zweiter Wellenleiter (4) aus mehreren Fasern (41; 40) besteht und auf der Seite des Reflexionselements (15) einen bevorzugt L-förmigen Faserquerschnittswandler (39) und auf der Seite des Detektors (8) einen bevorzugt quadratischen Faserquerschnittswandter (38) aufweist.

18. Vorrichtung nach Anspruch 17,
wobei die beiden Faserquerschnittswandler (39) auf der Seite des Reflexionselements (15) bzw. des Mikroprismas (48) in zumindest eine Halterung (43, 44) bzw. in zumindest einen Stecker integriert sind und in unmittelbarer Nähe der Querschnittsfläche des Reflexionselements (15; 48) angeordnet sind bzw. auf der Querschnittsfläche des Reflexionselements (15; 48) aufsitzen.

19. Vorrichtung nach Anspruch 1 oder 2,
wobei es sich bei der Prozeßsonde (2) um eine ATR-Sonde, eine Reflexionssonde oder eine Transmissionssonde handelt.

## Claims

1. A device for the IR spectrometric analysis of a solid, liquid or gaseous medium, with a process probe (2) which has a reflection element (15), with a linear variable filter (7), at least one detector element (8) and a control/evaluation unit (10),
wherein at least one radiation source (5) is provided, the electromagnetic radiation from which is fed into the reflection element (15),
wherein at least one waveguide (3) with an input portion (11) and an output portion (12) is provided,
wherein the electromagnetic radiation is conducted via the output portion (12) of the waveguide (13) into at least one defined region of the linear variable filter (7),
wherein the detector element (8) and the linear variable filter (7) are arranged so as to be movable relative to one another over approximately the length of the linear variable filter (7) and
wherein the control/evaluation unit (10) determines the spectrum of the medium from the measured values supplied by the detector element (8).

2. A device for the IR spectrometric analysis of a solid, liquid or gaseous medium, with a process probe (2) which has a reflection element (15), with a linear variable filter (7), at least one detector element (8) and a control/evaluation unit (10),
wherein at least one radiation source (5) is provided, the electromagnetic radiation from which is focussed into at least one defined region of the linear variable filter (7),
wherein at least one waveguide (4) is provided, via which the electromagnetic radiation is fed into the reflection element (15) after passing through the linear variable filter (6)¹,
wherein the radiation source (5) and the linear variable filter (7) are arranged so as to be movable relative to one another over approximately the length of the linear variable filter (7),
wherein the detector element (8) receives the electromagnetic radiation after it has passed through the reflection element (15) and
wherein the control/evaluation unit (10) determines the spectrum of the medium from the measured values supplied by the detector element (8).
¹ The reference numeral should be (7).

3. A device according to claim 1 or 2,
wherein the control/evaluation unit (10) controls the relative movement between the detector element (8) and the linear variable filter (7) or between the radiation source (5) and the linear variable filter (7) stepwise or continuously.

4. A device according to claim 1 or 2,
wherein the detector element (8) is fixedly mounted and
wherein the control/evaluation unit (10) moves the linear variable filter (7) stepwise past the detector element (8),
or wherein the radiation source (5) is fixedly mounted and
wherein the control/evaluation unit (10) moves the linear variable filter (7) stepwise or continuously past the detector element (8).

5. A device according to claim 1 or 2,
wherein the linear variable filter (7) is fixedly mounted and
wherein the control/evaluation unit (10) moves the detector element (8) stepwise past the linear variable filter (7),
or wherein the linear variable filter (7) is fixedly mounted and
wherein the control/evaluation unit (10) moves the linear variable filter (7) stepwise or continuously past the radiation source (5).

6. A device according to claim 1 or 2,
wherein a holding device (26) is provided, in which the detector element (8) and the light output portion (12) or the radiation source (5) and the light input portion (11) or the linear variable filter (7) are/is mounted.

7. A device according to claim 6,
wherein the holding device (26) or the detector element (8) or the radiation source (5) or the linear variable filter (7) is arranged on a guide rail (6).

8. A device according to claim 1 or 7,
wherein the output portion (12) and/or the input portion are/is a cross-section converter (22).

9. A device according to claim 3, 4, 5 or 6,
wherein a drive (9) is provided, by means of which the linear variable filter (7) or the detector element (8) or the radiation source (5) or the holding device (26) for the detector element (8) or the radiation source (5) is moved stepwise or continuously.

10. A device according to claim 1,
wherein a first optical waveguide (3) is a fibre switch (32), via which the measuring radiation and a reference radiation are guided to the reflection element (15), and wherein the measuring beam and the reference beam are conducted to the linear variable filter (7).

11. A device according to claim 1,
wherein the detector element (8) is a pyroelectric detector, preferably a thermopile or MCT detector, or a detector cell.

12. A device according to claim 1 or 2,
wherein the reflection element (15) is manufactured from a highly pure semiconductor material.

13. A device according to claim 1 or 2,
wherein the reflection element (15) is manufactured from a highly pure semiconductor material or another IR transmissive material, to which a thin diamond layer (21) is applied.

14. A device according to claim 1 or 2,
wherein the reflection element (15) is a microprism (48), which is preferably manufactured from diamond.

15. A device according to any one of claims 10 to 14,
wherein the reflection element (15) is dimensioned and shaped so that the beam path of the measuring light (18) or the reference light (28) undergoes a plurality of reflections in the reflection element (15), wherein the number of reflections is determinable via the length of the reflection element (15).

16. A device according to claim 14 or 15,
wherein the reflection element (15) has a round, square or polygonal cross-sectional area.

17. A device according to claim 16,
wherein the first waveguide (3) comprises a plurality of fibres (40; 41) and has a preferably linear fibre cross-section converter (37) on the side of the linear variable filter (7) and a preferably L-shaped cross-section converter (39) on the side of the reflection element (15), and
wherein a second waveguide (4) comprises a plurality of fibres (40; 41) and has a preferably L-shaped fibre cross-section converter (39) on the side of the reflection element (15) and a preferably square fibre cross-section converter (38) on the side of the detector (8).

18. A device according to claim 17,
wherein the two fibre cross-section converters (39) on the side of the reflection element (15) or microprism (48) are integrated into at least one mount (43, 44) or into at least one plug and are arranged in the immediate vicinity of the cross-sectional area of the reflection element (15; 48) or rest on the cross-sectional area of the reflection element (15; 48).

19. A device according to claim 1 or 2,
wherein the process probe (2) is an ATR probe, a reflection probe or a transmission probe.

## Revendications

1. Dispositif destiné à l'analyse spectrométrique par infrarouge d'un produit solide, liquide ou gazeux au moyen d'une sonde process (2), qui comporte un élément de réflexion (15), avec un filtre linéairement variable (7), au moins un élément détecteur (8) et une unité de régulation / d'exploitation (10),
pour lequel est prévue au moins une source de rayonnement (5), dont le rayonnement électromagnétique est injecté dans l'élément de réflexion (15), pour lequel est prévu au moins un guide d'ondes (3) présentant une section d'entrée (11) et une section de sortie (12),
pour lequel le rayonnement électromagnétique est acheminé à travers une section de sortie (12) du guide d'ondes (3) dans au moins une zone définie du filtre linéairement variable (7),
pour lequel l'élément détecteur (8) et le filtre linéairement variable (7) sont disposés de façon mobile l'un par rapport à l'autre sur approximativement la longueur du filtre linéairement variable (7) et
pour lequel l'unité de régulation / d'exploitation (10) détermine le spectre du produit au moyen des valeurs mesurées fournies par l'élément détecteur (8).

2. Dispositif destiné à l'analyse spectrométrique par infrarouge d'un produit solide, liquide ou gazeux au moyen d'une sonde process (2), qui comporte un élément de réflexion (15), avec un filtre linéairement variable (7), au moins un élément détecteur (8) et une unité de régulation / d'exploitation (10),
pour lequel est prévue au moins une source de rayonnement (5), dont le rayonnement électromagnétique est focalisé dans au moins une zone définie du filtre linéairement variable (7),
pour lequel est prévu au moins un guide d'ondes (4), par l'intermédiaire duquel le rayonnement, après avoir passé le filtre linéairement variable (7), est injecté dans l'élément de réflexion (15),
pour lequel la source de rayonnement (5) et le filtre linéairement variable (7) sont disposés de façon mobile l'un par rapport à l'autre sur approximativement la longueur du filtre linéairement variable (7),
pour lequel l'élément détecteur reçoit le rayonnement électromagnétique après avoir passé l'élément de réflexion (15) et
pour lequel l'unité de régulation / d'exploitation (10) détermine le spectre du produit au moyen des valeurs mesurées fournies par l'élément détecteur (8).

3. Dispositif selon la revendication 1 ou 2,
pour lequel l'unité de régulation / d'exploitation (10) commande pas à pas ou en continu le mouvement relatif entre l'élément détecteur 8 et le filtre linéairement variable (7), ou entre la source de rayonnement (5) et le filtre linéairement variable (7).

4. Dispositif selon la revendication 1 ou 2,
pour lequel l'élément détecteur (8) est monté de façon fixe et
pour lequel l'unité de régulation / d'exploitation (10) déplace pas à pas le filtre linéairement variable (7) le long de l'élément détecteur (8),
ou pour lequel la source de rayonnement (5) est montée de façon fixe ou
pour lequel l'unité de régulation / d'exploitation (10) déplace pas à pas ou en continu le filtre linéairement variable (7) le long de l'élément détecteur (8).

5. Dispositif selon la revendication 1 ou 2,
pour lequel le filtre linéairement variable (7) est monté de façon fixe et
pour lequel l'unité de régulation / d'exploitation (10) déplace pas à pas l'élément détecteur (8) le long du filtre linéairement variable (7),
ou pour lequel le filtre linéairement variable (7) est monté de façon fixe et
pour lequel l'unité de régulation / d'exploitation (10) déplace pas à pas ou en continu le filtre linéairement variable (7) le long de la source de rayonnement (5).

6. Dispositif selon la revendication 1 ou 2,
pour lequel est prévu un dispositif de maintien (26), dans lequel est/sont monté(s) l'élément détecteur (8) et la section de sortie lumineuse (12), ou la source de rayonnement (5) et la section d'entrée lumineuse ou le filtre linéairement variable (7).

7. Dispositif selon la revendication 6,
pour lequel le dispositif de maintien (26) ou l'élément détecteur (8) ou la source de rayonnement (5) ou le filtre linéairement variable (7) est disposé sur un rail de guidage (6).

8. Dispositif selon la revendication 1 ou 7,
pour lequel il s'agit, concernant la section de sortie (12) et/ou la section d'entrée, d'un convertisseur de surface (22).

9. Dispositif selon la revendication 3, 4, 5 ou 6,
pour lequel est prévu un entraînement (9), par l'intermédiaire duquel le filtre linéairement variable (7) ou l'élément détecteur (8), ou la source de rayonnement (5)
ou le dispositif de maintien (26) pour l'élément détecteur (8) ou la source de rayonnement (5) est déplacé pas à pas ou en continu.

10. Dispositif selon la revendication 1,
pour lequel un premier guide d'ondes optiques (3) est un coupleur de fibres (32), par l'intermédiaire duquel le rayonnement de mesure et un rayonnement de référence sont guidés vers l'élément de réflexion (15) et
pour lequel le rayon de mesure et le rayon de référence sont acheminés vers le filtre linéairement variable (7).

11. Dispositif selon la revendication 1,
pour lequel il s'agit, concernant l'élément détecteur (8), d'un détecteur pyroélectrique, de préférence d'un détecteur thermopile ou MCT, ou d'une cellule de détection.

12. Dispositif selon la revendication 1 ou 2,
pour lequel l'élément de réflexion (15) est fabriqué en un matériau semi-conducteur de grande pureté.

13. Dispositif selon la revendication 1 ou 2,
pour lequel l'élément de réflexion (15) est fabriqué en un matériau semi-conducteur de grande pureté ou tout autre matériau transparent dans le domaine infrarouge, sur lequel peut être appliquée une fine couche de diamant (21).

14. Dispositif selon la revendication 1 ou 2,
pour lequel il s'agit, concernant l'élément de réflexion (15), d'un microprisme (48), lequel est de préférence fabriqué en diamant.

15. Dispositif selon l'une des revendications 10 à 14,
pour lequel l'élément de réflexion (15) est dimensionné et conçu de telle sorte que la trajectoire de la lumière de mesure (19) ou de la lumière de référence (28) subit un grand nombre de réflexions dans l'élément de réflexion (15), le nombre de réflexions pouvant être défini sur la longueur de l'élément de réflexion (15).

16. Dispositif selon la revendication 14 ou 15,
pour lequel l'élément de réflexion (15) présente une surface de section ronde, quadratique ou polygonale.

17. Dispositif selon la revendication 16,
pour lequel le premier guide d'ondes (3) se compose de plusieurs fibres (40, 41) et comporte, sur le côté du filtre linéairement variable (7), de préférence un convertisseur de surface pour fibres (37) et, sur le côté de l'élément de réflexion (15), de préférence un convertisseur de surface (39) en forme de L, et
pour lequel un deuxième guide d'ondes (4) se compose de plusieurs fibres (41, 40) et comporte, sur le côté de l'élément de réflexion (15), de préférence un convertisseur de surface pour fibres (39) en forme de L et, sur le côté de l'élément détecteur (8), de préférence un convertisseur de surface pour fibres (38) quadratique.

18. Dispositif selon la revendication 17,
pour lequel les deux convertisseurs de surface (39) se trouvant du côté de l'élément de réflexion (15) ou du microprisme (48) sont intégrés dans au moins un support (43, 44) ou dans au moins un connecteur, et sont disposés à proximité immédiate de la surface de section de l'élément de réflexion (15, 48), ou reposent sur la surface de section de l'élément de réflexion (15, 48).

19. Dispositif selon la revendication 1 ou 2,
pour lequel il s'agit, concernant la sonde process (2), d'une sonde ATR, d'une sonde de réflexion ou d'une sonde de transmission.
